Europäisches Patentamt

European Patent Office

Office européen des brevets

(11) Numéro de publication: **0 419 318 A1**

# (12) DEMANDE DE BREVET EUROPEEN

(21) Numéro de dépôt: 90402482.5

(22) Date de dépôt: **10.09.90**

(51) Int. Cl.5: **C01F 17/00**

(30) Priorité: **20.09.89 FR 8912347**

(43) Date de publication de la demande:
**27.03.91 Bulletin 91/13**

(84) Etats contractants désignés:
**AT DE FR GB**

(71) Demandeur: **RHONE POULENC CHIMIE**
**25 Quai Paul Doumer**
**F-92408 Courbevoie Cédex(FR)**

(72) Inventeur: **Cailly, Francinet**
**42 à 52 rue Villiers de l'Isle Adam**
**F-75020 Paris(FR)**
Inventeur: **Mottot, Yves**
**14, avenue Salvador Alliendé**
**F-93290 - Tremblay en France(FR)**

(74) Mandataire: **Esson, Jean-Pierre et al**
**RHONE-POULENC CHIMIE Service Brevets**
**Chimie 25, quai Paul Doumer**
**F-92408 Courbevoie Cedex(FR)**

(54) **Procédé de récupération des valeurs de terres rares dans les gypses.**

(57) La présente invention concerne un procédé de récupération des valeurs de terres rares contenues dans des gypses.

ce procédé consiste à solubiliser le gypse par l'eau et à traiter les insolubles recueillis contenant la majorité des terres rares par une solution comportant des ions carbonates, puis à solubiliser les terres rares par une attaque acide.

Les terres rares sont ensuite extraites et éventuellement séparées de cette solution par tout procédé classique d'extraction.

EP 0 419 318 A1

# PROCEDE DE RECUPERATION DES VALEURS DE TERRES RARES DANS LES GYPSES

L'invention concerne un procédé de récupération des valeurs de terres rares dans des gypses.

Les terres rares, éléments formant la famille des lanthanides de la classification périodique de Mendeleev, sont présents dans de nombreux minerais naturels à des concentrations plus ou moins élevées.

Dans l'exposé qui suit de la présente invention, on entend par l'expression "terres rares", les éléments de terres rares appelés lanthanides ayant des numéros atomiques de 57 à 71 inclus et l'yttrium de numéro atomique égal à 39.

De nombreux procédés ont déjà été mis au point pour récupérer les terres rares dans des minerais contenant des teneurs élevées ou moyennes et même faibles en terres rares.

Toutefois, ces procédés ne permettent pas de traiter tous les minerais ou sources de terres rares existantes.

En effet, les terres rares sont également présentes dans des minéraux naturels ou dans des résidus provenant des procédés de traitement de minerai pour l'extraction ou la production d'autres composés, tels que les gypses.

Compte tenu de l'importance des quantités disponibles de gypse dans le monde, de nombreux travaux on été réalisés pour tenter de récupérer les valeurs de terres rares contenues dans ce matériau.

Tous les procédés connus à ce jour ne permettent pas de récupérer de manière économique les terres rares, notamment les taux de récupération obtenus sont très faibles.

La présent invention a notamment pour but de remédier à ces inconvénients en proposant un procédé économique de récupération permettant de récupérer la totalité ou presque la totalité des valeurs de terres rares présentes dans un gypse.

A cet effet, l'invention propose un procédé de récupération de valeurs de terres rares contenues dans un gypse, consistant à dissoudre le gypse dans de l'eau et à recueillir les insolubles contenant les terres rares, puis à attaquer les insolubles recueillis par un acide minéral pour obtenir une solution de sels de terres rares et à récupérer celles-ci à partir de cette solution. En outre, les insolubles sont traités avec une solution contenant des ions carbonates.

Toutefois, pour augmenter la solubilité du gypse on peut utiliser une eau contenant des ions, telle qu'une eau salée comme l'eau de mer.

Par gypse, on entend les gypses naturels ou les gypses formés lors de procédés chimiques tels que par exemple, les gypses formés dans les procédés d'attaque sulfurique des minerais de phosphates tels que l'apatite, par exemple, qui contiennent des terres rares à des concentrations variables.

Par gypse formés dans ces procédés d'attaque, on entend les gypses issus de l'attaque sulfurique et les boues obtenues lors de la désaturation des acides phosphoriques bruts ou dans l'étape de concentration de ceux-ci.

Le traitement des insolubles par des ions carbonates peut être réalisé soit par addition des ions carbonates dans l'eau salée de dissolution, soit par mise en contact des insolubles avec une solution contenant des ions carbonates.

Ce traitement des insolubles par des carbonates permet de manière inattendue d'améliorer le rendement de l'attaque acide des terres rares et leur solubilisation.

Les ions carbonates sont apportés par tout composé susceptible de libérer ceux-ci, notamment en milieu aqueux.

A titre d'exemple, ces composés sont par exemple des carbonates minéraux tels que les carbonates d'alcalins, comme le carbonate de sodium, le carbonate de potassium, le carbonate d'ammonium, les carbonates, d'alcalino-terreux comme le carbonate de calcium ou le carbonate de strontium, ou l'anhydride carbonique.

La quantité d'ions carbonates n'est pas critique, toutefois dans un mode de réalisation préféré, on utilise une quantité d'ions carbonates pour avoir un rapport molaire ions carbonates / Terres rares (exprimés en oxyde de terres rares) compris entre 3 environ et 30 environ.

La température de traitement des insolubles par les ions carbonates n'est pas critique. Ainsi ce traitement peut être réalisé, avantageusement, à température ambiante (10°C - 35°C) ou à une température comprise entre la température ambiante et 100°C.

Selon une autre caractéristique de l'invention, les insolubles sont ensuite attaqués par un acide minéral pour transformer au moins les valeurs terres rares en sels solubles.

Ces sels de terres rares ainsi produits sont dissous dans l'eau soit directement lors de l'attaque si celle-ci a été réalisée en milieu aqueux, soit par reprise à l'eau de la masse d'attaque.

Par acide minéral susceptible d'être utilisé dans l'attaque des insolubles, on peut citer à titre d'exemple l'acide nitrique, l'acide sulfurique, l'acide chlorhydrique, associé ou non à des oxydants.

Toutefois, l'attaque des insolubles et la récupération des terres rares peuvent être réalisées par tout procédé tel que par exemple par le procédé d'attaque sulfurique et reprise de la masse d'attaque par une solution contenant un cation formant un sel insoluble avec les ions sulfate et un anion formant un sel soluble avec les terres rares tel que décrit dans les demandes de brevets français n° 89 11989, et n° 89 11990, ou un procédé d'attaque nitrique avec récupération des terres rares par extraction liquide · liquide et recyclage des ions nitrates par traitement de la solution épurée en terres rares tel que décrit dans la demande de brevet français n° 89 02757.

Ces deux procédés sont donnés uniquement à titre d'exemple. C'est ainsi que des procédés comprenant une attaque et mise en solution des terres rares, puis récupération de celle-ci soit par précipitation sous forme de sulfate double, hydroxyde, carbonate, oxalate par exemple, soit par extraction liquide · liquide sans recyclage de l'acide peuvent également être utilisés dans l'invention.

D'autres buts, détail et avantages de l'invention apparaîtront plus clairement au vu des exemples donnés ci-dessous uniquement à titre indicatif.

## EXEMPLE 1

100 g de gypse issu d'un procédé d'attaque sulfurique d'un minerai de phosphate et contenant environ 0,4 % de terres rares (exprimés en oxydes de terres rares $TR_2O_3$) sont dissous dans 20 litres d'eau salée (solution aqueuse à 25 g/l de chlorure de sodium).

Les insolubles sont récupérés par filtration et traités par une solution aqueuse contenant 60 g/l de carbonate de sodium. Ce traitement consiste à maintenir le mélange solution de carbonate de sodium / insolubles pendant une heure à 90°C. Le rapport molaire $CO_3 = TR_2O_3$ est de : 12.

Après séparation, les insolubles ainsi traités sont attaqués par une solution d'acide nitrique concentrée en présence d'eau. La quantité d'acide nitrique est en fort excès par rapport à la quantité théorique nécessaire pour attaquer les éléments contenus dans les insolubles.

L'analyse de la solution aqueuse recueillie après élimination des résidus solides, montrent que 91 % des terres rares contenues dans le gypse traité sont récupérés.

Cette solution de terres rares est ensuite traitée par exemple dans un procédé d'extraction liquide / liquide pour extraire les valeurs de terres rares et éventuellement séparées celles-ci, de manière classique.

## EXEMPLE 2a ET EXEMPLE 2b COMPARATIF

100 g de gypse utilisé dans l'exemple 1 sont dissous dans 20 l d'eau salée (25 g/l de NaCl).

Les insolubles récupérés, environ 1g, sont partagés en deux quantités égales.

Une première partie est soumise à un traitement par une solution de carbonate de sodium (rapport $CO_3 = /TR_2O_3$ : 12) puis attaque par de l'acide nitrique concentré en fort excès.

La solution récupérée contient 90 % des terres rares contenues dans le gypse traité.

La seconde partie est directement attaquée par une même quantité d'acide nitrique. La solution récupérée contient 52 % terres rares présentes dans le gypse traité.

Ces deux essais montrent clairement l'influence du traitement des insolubles par une solution de carbonate sur le rendement de l'attaque et récupération des valeurs de terres rares.

## Revendications

1. Procédé de récupération des valeurs de terres rares contenues dans du gypse, consistant à dissoudre le gypse dans de l'eau et à recueillir les insolubles contenant les terres rares, caractérisé en ce qu'il consiste à attaquer les insolubles recueillis par un acide minéral, pour obtenir une solution de sels de terres rares, et à récupérer les terres rares à partir de cette solution et en ce que, les insolubles sont traités avec une solution contenant des ions carbonates.

2. Procédé selon la revendication 1, caractérisé en ce que le traitement par des ions carbonates est effectué après récupération des insolubles et avant l'attaque par un acide minéral.

3. Procédé selon la revendication 1, caractérisé en ce que le traitement par des ions carbonates est réalisé simultanément à la dissolution du gypse par de l'eau salée, les ions carbonates étant ajoutés dans cette eau salée.

4. Procédé selon l'une des revendications précédentes caractérisé en ce que l'on utilise la quantité de carbonate pour avoir un rapport $CO_3 = TR_2O_3$ compris entre 3 et 30.

5. Procédé selon l'une des revendications précédentes caractérisé en ce que les ions carbonates sont ajoutés sous forme de sels ou d'anhydride carbonique.

6. Procédé selon l'une des revendications précédentes caractérisé en ce que l'acide minéral est choisi dans le groupe comprenant, l'acide sulfurique, l'acide nitrique, l'acide chlorhydrique.

7. Procédé selon l'une des revendications précédentes caractérisé en ce que la récupération des terres rares à partir de la solution de sels de terres rares est réalisée par précipitation des terres rares.

8. Procédé selon la revendication 7, caractérisé en ce que les terres rares sont précipitées sous forme d'hydroxyde, de carbonates ou d'oxalates ou de sulfates doubles.

9. Procédé selon l'une des revendications 1 à 6, caractérisé en ce que la récupération des terres rares à partir de la solution de sels de terres rares est réalisée par un procédé d'extraction liquide / liquide entre ladite solution et une phase organique contenant un agent d'extraction des terres rares, insoluble dans l'eau, puis re-extraction des terres rares de la phase organique.

10. Procédé selon l'une des revendications précédentes caractérisé en ce que le gypse est un résidu des procédés de préparation d'acide phosphorique par attaque sulfurique de phosphates.

11. Procédé selon l'une des revendications 1 à 9 caractérisé en ce que le gypse est un minerai naturel.

## Office européen des brevets

# RAPPORT DE RECHERCHE EUROPEENNE

Numéro de la demande

**EP 90 40 2482**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 68, no. 24, 1968 Columbus, Ohio, USA J. Kwiecien et al.: "Separation of rare earths from waste calcium sulfate." colonne de droite; ref. no. 106496 K \* abrégé & PL-A-54179 (Inst. Nawozow Sztucznych) \* | 1,2,4-8, 10 | C 01 F 17/00 |
| X | SOVIET INVENTIONS ILLUSTRATED, Section Ch, week 8641, 23 Oct. 1986, Derwent Publ. London GB \* no 86-270121 41 & SU-A-340262 (B.N. Laskorin et al.) \* | 1,2,4-8, 10 | |
| A | CHEMICAL ABSTRACTS, vol. 78, no. 24, 18 juin 1973 Columbus, Ohio, USA Y. Hirashima et al.: "Rare earth elements. XXXIII. Extraction of rare earth elements from bastnaesite by mineral acids." page 278; ref. no. 152030 H \* abrégé \* | 6 | |
| A | CHEMICAL ABSTRACTS, vol. 106, no. 20, mai 1987 Columbus, Ohio, USA R. Kijkowska: "Recovery of lanthanides from phosphogypsum." page 146; ref. no. 158861 Y \* abrégé & PL-A-129444 (POLITECHNIKA KRAKOWSKA) \* | 6 | |
| | | | **DOMAINES TECHNIQUES RECHERCHES (Int. Cl.5)** |
| | | | C 01 F |

Le présent rapport de recherche a été établi pour toutes les revendications

| Lieu de la recherche | Date d'achèvement de la recherche | Examinateur |
|---|---|---|
| La Haye | 18 novembre 90 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

\&: membre de la même famille, document correspondant